# EUROPÄISCHE PATENTSCHRIFT

(11) **EP 2 264 344 B1**
(45) Veröffentlichungstag und Bekanntmachung des Hinweises auf die Patenterteilung: **08.08.2012**
(21) Anmeldenummer: 09162802.4
(22) Anmeldetag: 16.06.2009
(51) Int. Cl.: F16K 27/02, F16B 39/06, B65D 50/00

(54) **Sicherungselement gegen unbefugtes Losschrauben**
Element for preventing unauthorised unscrewing
Elément de sécurisation contre le dévissage interdit

(43) Veröffentlichungstag der Anmeldung: 22.12.2010
(73) Patentinhaber: Georg Fischer Rohrleitungssysteme AG, 8201 Schaffhausen (CH)
(72) Erfinder: Hunnekuhl, Jörg, 79798, Jestetten (DE); Stumpp, Jürgen, 79771, Klettgau (DE)
(74) Vertreter: De Colle, Piergiacomo

(56) Entgegenhaltungen:
- EP-A2- 1 959 202
- WO-A1-2008/154575
- US-A- 4 968 201
- US-B1- 6 173 851

## Beschreibung

Die vorliegende Erfindung bezieht sich auf ein zweiteiliges Gehäusse beinhaltend zwei verschraubbare Gehäuseteile und ein Sicherungselement gegen Losdrehen der zweier Gehäuseteile.

Im Rohrleitungsbau werden verschiedene Gehäuseteile mit einander verschraubt. Beispielsweise bei einem Membranventil wird die Membran zwischen zwei mit einander verschraubbare Gehäuseteile festgelegt. Die Gehäuseteile müssen im Verlauf der Betriebszeit geöffnet werden können um die Membran auszutauschen. Beim Nachlassen der Klemmung der Membran müssen die Gehäuseteile zueinander nachgezogen werden können. Während des Betriebs des Membranventils sollen die Gehäuseteile gegen Losdrehen der Gehäuseteile gesichert sein.

D**ie** US 4 968 201 **offenbart ein mehrteiliges Sicherungselement für einen Adapter.**

**Sowie auch die Dokumente** WO 2008/154575**,** US 6 173 851 **und** EP 1 959 202 **eine Sicherungselement vorsehen.**

Ausgehend von diesem Stand der Technik ist es Aufgabe der Erfindung, ein Sicherungselement gegen unbefugtes Losdrehen anzugeben, dass in den Gehäuseteilen möglichst integral und von Aussen unsichtbar angeordnet ist.

Diese Aufgabe wird durch die Merkmale des Anspruchs 1 gelöst.

Bevorzugte Weiterbildungen der Erfindung ergeben sich aus den abhängigen Ansprüchen.

Es ist von Vorteil, dass das Membranventil gegen unbefugtes Ausbauen gesichert ist. Dies wird dadurch erreicht, dass im Gehäuseunterteil ein Sicherungselement klemmend angeordnet ist. Das Sicherungselement ist zwischen dem Gehäuseunterteil und dem Aussengehäuse des Gehäuseoberteils angeordnet, wobei das Sicherungselement einen federnden Bereich mit einer nach Aussen weisenden Verzahnung aufweist. Das Aussengehäuse weist eine mit der Verzahnung des Sicherungselementes zusammenwirkende nach Innen weisende weitere Verzahnung auf, wobei die Verzahnungen zwei unterschiedliche Flankenwinkel aufweisen, derart, dass der Widerstand gegen das Losschrauben der Gehäuseteile grösser ist als gegen das Festschrauben.

Ein Ausführungsbeispiel der Erfindung wird anhand der Figuren beschrieben. Es zeigen:
Figur 1 eine seitliche Sicht auf ein Ventilgehäuse eines Membranventils,
Figur 2 eine perspektivische Sicht auf ein Sicherungselement des Membranventils und
Figur 3 einen Schnitt durch das Ventilgehäuse mit dem Sicherungselement.
Figur 4 eine bereichsweise Vergrösserung aus Figur 3 mit dem Sicherungselement und
Figur 5 eine mit Figur 4 vergleichbare Vergrösserung im zusammen geschraubten Zustand der Anordnung.

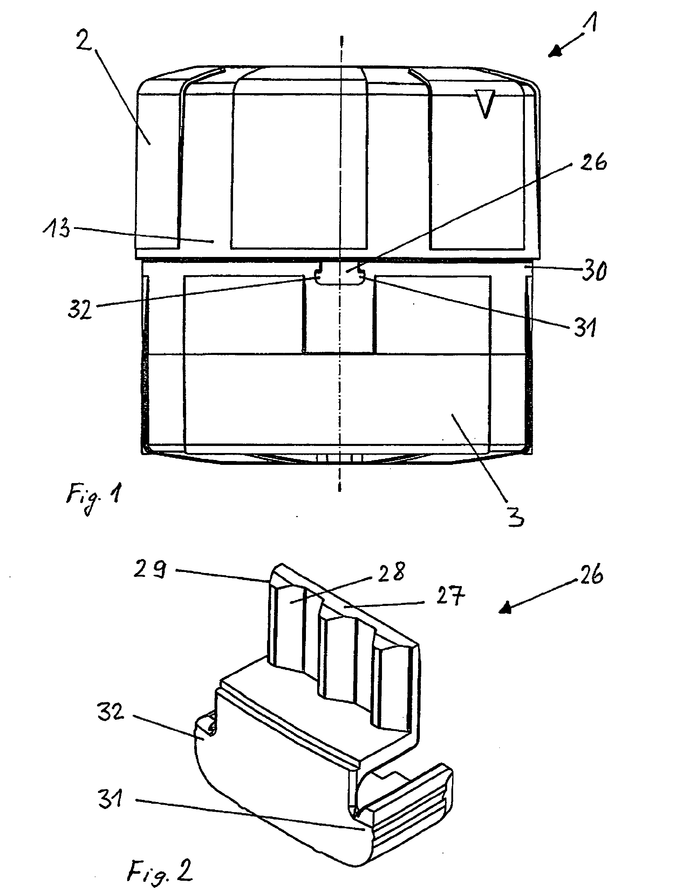

In Figur 1 sind ein Aussengehäuse 13 eines Gehäuseoberteils 2 und ein Gehäuseunterteil 3 eines Membranventils 1 in einer Seitenansicht dargestellt. Im Gehäuseunterteil 3 ist ein Sicherungselement 26 passgenau und gegen Verdrehung gesichert eingeklemmt. Das Sicherungselement 26 ist im Bereich eines Absatzes 30 angeordnet, der am Gehäuseunterteil 3 beim Zusammenschrauben als Anschlag für die Unterkante des Aussengehäuses 13 dient. Die genaue Passung und verdrehsichere Anordnung des Sicherungselementes 26 wird erreicht durch die Ausbildung zweier Schultern 31, 32, die in einer damit übereinstimmenden Aussparung am Gehäuseunterteil 3 eingepasst werden. Das Sicherungselement 26 kann bei Bedarf ausgewechselt werden. In Figur 1 ist das Membranventil 1 in völlig zusammen geschraubten Zustand dargestellt.

In Figur 2 ist das Sicherungselement 26 für sich alleine perspektivisch dargestellt. Das Sicherungselement 26 weist einen federnden Bereich 27 auf, der parallel zur Spindelachse des Membranventils 1 angeordnet ist und senkrecht zur Spindelachse federn kann. Das Sicherungselement 26 weist nach Aussen weisenden Zahnflanken 28, 29 auf, die mit weiteren hier nicht dargestellten nach innen weisenden Zahnflanken auf der Innenseite am Umfang eines Aussengehäuses 13 des Gehäuseoberteils 2 zusammenwirken und komplementär zueinander ausgebildet sind. Die Zahnflanken 28, 29 weisen wesentlich unterschiedliche Flankenwinkel auf. Hiermit wird erreicht, dass die Kraft, die aufgewendet wird zum Lösen der Schraubverbindung wesentlich grösser ist als die Kraft, die nötig ist für das Zusammenschrauben. Der federnde Bereich 27 ist innerhalb des Aussengehäuses 13 angeordnet und ist im zusammen geschraubten Zustand an der Aussenseite des Membranventils 1 nicht oder kaum sichtbar.

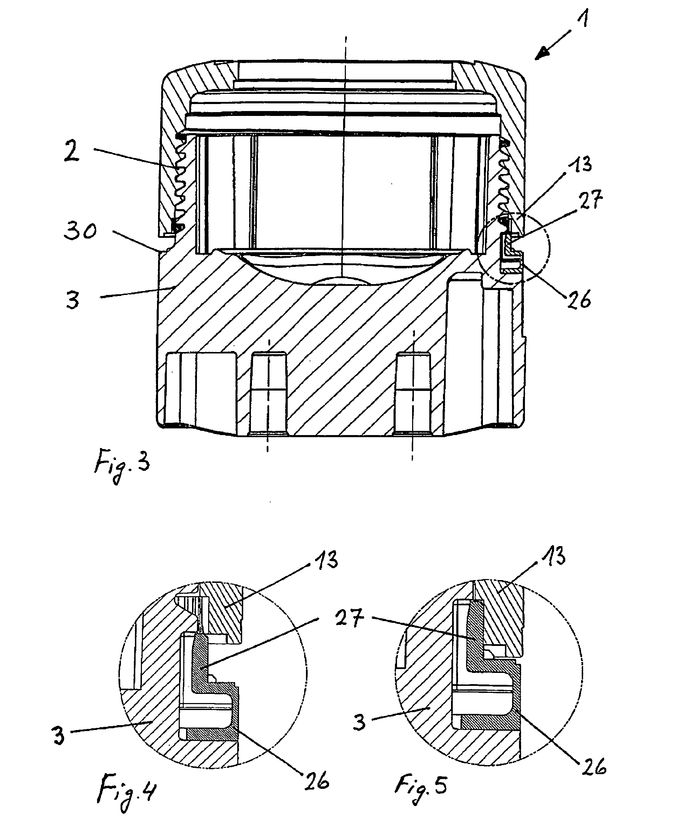

In Figur 3 ist das Sicherungselement 26 zusammen mit dem Gehäuseunterteil 3 und dem Aussengehäuse 13 des Gehäuseoberteils 2 geschnitten dargestellt. Figur 3 zeigt den Zustand beim Beginn des Zusammenschraubens des Gehäuseoberteils 2 mit dem Gehäuseunterteil 3 des Membranventils 1. Die Verschraubung des Gehäuseoberteils 2 mit dem Gehäuseunterteil 3 kann bei zunehmender Verformung der Membran nachgezogen werden. Mit dem Sicherungselement 26 wird ein unbefugtes Öffnen oder Aufschrauben des

Membranventils 1 verhindert.

In Figuren 4 und 5 sind Vergrösserungen der Verschraubungsanordnung dargestellt. Figur 4 ist eine Vergrösserung aus Figur 3 und stellt den Zustand beim Beginn des Zusammenschraubens und Figur 5 stellt den Zustand am Ende des Zusammenschraubens dar.

Es können, um die Schliesskraft zu erhöhen, verteilt am Umfang des Ventilgehäuses auch mehrere Sicherungselemente 26 angeordnet sein. Das Sicherungselement 26 kann auch für andere Ventilbauarten als das Membranventil 1 verwendet werden oder auch für andere Elemente eines Rohrleitungssystems, beispielsweise Überwurfmuttern, wobei zwei Gehäuseteile mit einander verschraubt werden und gegen unbefugtes Losdrehen gesichert werden müssen.

## Patentansprüche

1. Zweiteiliges Gehäuse beinhaltend zwei verschraubbare Gehäuseteile (3,2) und ein Sicherungselement (26) gegen Losdrehen der zweier Gehäuseteile (3, 2), **dadurch gekennzeichnet, dass** das einteilige Sicherungselement (26) einen federnden Bereich (27) aufweist und in einem der Gehäuseteile (3) klemmend und zusammenwirkend mit dem anderen Gehäuseteil (2) angeordnet ist, wobei der federnde Bereich (27) eine nach Aussen weisende Verzahnung (28, 29) aufweist.

2. Gehäusse nach dem Anspruch 1, **dadurch gekennzeichnet, dass** das Sicherungselement (26) im Gehäuseunterteil (3) klemmend und zusammenwirkend mit einem Aussengehäuse (13) des Gehäuseoberteils (2) eines Membranventils (1) angeordnet ist.

3. Gehäuse nach mindestens einem der Ansprüche 1 oder 2, **dadurch gekennzeichnet, dass** das Aussengehäuse (13) eine mit der Verzahnung (28, 29) des Sicherungselementes (26) zusammenwirkende nach Innen weisende weitere Verzahnung aufweist.

4. Gehäuse nach mindestens einem der Ansprüche 1 bis 3, **dadurch gekennzeichnet, dass** die Verzahnungen (28, 29) zwei unterschiedliche Flankenwinkel aufweisen, derart, dass der Widerstand gegen das Losschrauben der Gehäuseteile (2, 3) grösser ist als gegen das Festschrauben.

## Claims

1. Two-part housing containing two housing parts (3, 2), which can be screwed together, and an element (26) for securing the two housing parts (3, 2) against unscrewing, **characterized in that** the one-part securing element (26) has a resilient region (27) and is arranged in a clamping manner in one of the housing parts (3) such that it engages with the other housing part (2), wherein the resilient region (27) has an outwardly facing toothing (28, 29).

2. Housing according to Claim 1, **characterized in that** the securing element (26) is arranged in a clamping manner in the lower housing part (3) such that it engages with an external housing (13) of the upper housing part (2) of a diaphragm valve (1).

3. Housing according to at least one of Claims 1 and 2, **characterized in that** the external housing (13) has an inwardly facing further toothing, which engages with the toothing (28, 29) of the securing element (26).

4. Housing according to at least one of Claims 1 to 3, **characterized in that** the toothings (28, 29) have two different flank angles, such that the resistance of the housing parts (2, 3) to unscrewing is greater than to tightening.

## Revendications

1. Boîtier en deux parties comportant deux parties de boîtier (3, 2) pouvant être vissées et un élément de sécurisation (26) contre le dévissage des deux parties de boîtier (3, 2), **caractérisé en ce que** l'élément de sécurisation (26) en une partie comprend une zone élastique (27) et est disposé dans l'une des parties de boîtier (3) de manière serrée et de manière à coopérer avec l'autre partie de boîtier (2), la zone élastique (27) comprenant une denture (28, 29) orientée vers l'extérieur.

2. Boîtier selon la revendication 1, **caractérisé en ce que** l'élément de sécurisation (26) est disposé dans la partie inférieure de boîtier (3) de manière serrée et de manière à coopérer avec un boîtier extérieur (13) de la partie supérieure de boîtier (2) d'une soupape à membrane (1).

3. Boîtier selon au moins l'une quelconque des revendications 1 et 2, **caractérisé en ce que** le boîtier extérieur (13) comprend une denture supplémentaire orientée vers l'intérieur et coopérant avec la denture (28, 29) de l'élément de sécurisation (26).

4. Boîtier selon au moins l'une quelconque des revendications 1 à 3, **caractérisé en ce que** les dentures (28,29) comprennent deux angles de flanc différents, de telle sorte que la résistance au dévissage des parties de boîtier (2, 3) soit supérieure à la résistance au vissage.
